# EUROPEAN PATENT APPLICATION

(11) **EP 4 230 831 A1**
(43) Date of publication of application: **23.08.2023**
(21) Application number: 21879575.5
(22) Date of filing: 31.08.2021
(51) Int. Cl.: E05F 15/71, B60H 1/00, B60J 7/057

(54) **DEVICE FOR THE AUTOMATIC CLOSING OF VEHICLE WINDOWS, ROOFS AND SUNROOFS UNDER ADVERSE METEOROLOGICAL PHENOMENA**

(30) Priority: 13.10.2020 ES 202032216 U
(71) Applicant: Salconi Group, S.L.U., 50012 Zaragoza (ES)
(72) Inventor: LÓPEZ CARRERAS, José Luis, 50012 Zaragoza (ES)
(74) Representative: Pons
(86) International application number: PCT/ES2021/070629
(87) International publication number: WO 2022/079327

(57) **Abstract**

The device (17) enables the automatic closing of vehicle windows, roofs in the case of convertible cars, and sunroofs when adverse weather events are detected, such as rain, snow or any other fluid that may fall on the vehicle, or when it is detected that the ambient light has dimmed below a certain threshold value. Specifically, the device (17) comprises a control module (5), intended to be connected to and activate the electric motors (11, 12, 13) of vehicle windows, roofs and/or sunroofs, a rain sensor (7), connected to the control module (5) and which sends a signal to the control module (5) when it detects that a fluid is falling on the vehicle, and a power supply module (14) connected to the control module (5).

## Description

### OBJECT OF THE INVENTION

The object of the invention belongs to the transport sector, and specifically to the automobile sector, and it consists of a device comprising a rain sensor or an ambient light sensor, such as those commonly installed in vehicles, which enables the automatic closing of vehicle windows, roofs in the case of convertible cars, and sunroofs when adverse weather events are detected, such as rain, snow or any other fluid that may fall on the vehicle, or when it is detected that the ambient light has dimmed below a certain threshold value.

### BACKGROUND OF THE INVENTION

Today cars are evolving very quickly. Users no longer look for simple vehicles, but rather choose those that have improvements, such as power windows, heated seats, and everything that implies a more comfortable ride.

The modifications that vehicles undergo, however, not only entail a more comfortable interior, but they also tend towards achieving driving comfort. Systems like ABS (Antilock Braking System), alarms that are activated when exceeding a certain speed limit, and parking or cruising speed sensors are just some of the new add-ons that all users want to incorporate into their vehicles.

Technologies for driving comfort have been around for a long time. Among all of them, the rain sensor should be highlighted, which most vehicles currently have integrated into a system that automatically activates the windscreen wipers in the event that they detect rain or snow, known as smart windscreen wipers. This represents a significant improvement in driving, since the driver is not distracted when activating them.

The rain sensor determines when it is raining and activates the windscreen wipers if necessary, depending on the precipitation intensity. To do this, the sensor detects the water droplets that fall on the vehicle's front window pane and activates the windscreen wipers, which react within fractions of a second, to make it easier to see in the event of precipitation.

The operation of these rain sensors is not limited to this type of precipitation. In the event that it starts to snow, or that the vehicle travels through certain areas or overtakes another vehicle and water or another liquid substance splashes onto the front glass, the sensor is responsible for sending a signal to the windscreen wipers, which are activated. Furthermore, the sensor itself is capable of detecting precipitation intensity, so it adapts its speed to the need to clean the vehicle's front window pane, so that it does not prevent the driver from seeing correctly.

This technology not only improves driving comfort, but also significantly increases road safety by preventing the driver from being distracted when pushing the shaft that activates them manually.

Normally, the rain sensor installed in a vehicle is activated by default, but it is possible to deactivate it manually, such that the driver must activate the windscreen wipers manually, with the lever indicated for it.

The rain sensor works by a system of light refraction and reflection, that is, it is sensitive to said light. The sensor is installed on the inner side of vehicle's window pane, almost always on the lower part of the rearview mirror positioned in the centre of the upper part of the window pane.

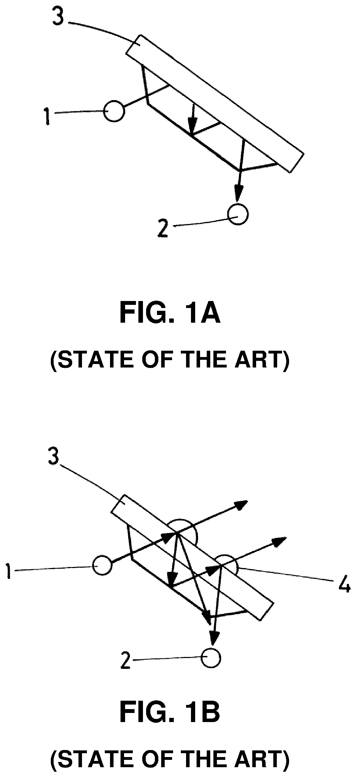

As shown in figures 1A and 1B, the sensor comprises two diodes, an emitting diode (1) and a receiving diode (2). The emitting diode (1) generates a beam of light (which may or may not be visible) on the vehicle's window pane (3), at an angle that enables the beam to reflect on the window pane (3), while the receiving diode (2) measures the brightness of the light that is reflected.

Under normal conditions, as shown in figure 1A, the receiving diode (2) receives all the brightness. In the event that water droplets (4) have been deposited on the window pane (3), as can be seen in figure 1B, the reflection behaviour is different, in other words, the receiving diode (2) receives less light. This means that there is water (4) or snow on the surface of the window pane (3). The greater the amount of water (4) on it, the less light received by the receiving diode (2), even if the emitting diode (1) is the same. Based on the amount of light received by the receiving diode (2), the windscreen wiper will be activated at one speed or another, or it will remain at rest.

In addition to the rain sensor, vehicles may also have an integrated ambient light sensor, which function is to check the level of lighting that exists outside the car, and thus turn on the lights if necessary for safety. With this additional sensor, car lights can be controlled by activating them when it gets dark or when entering a garage or a tunnel, and deactivating them when they are not necessary, without the driver having to intervene to turn them on or off.

### DESCRIPTION OF THE INVENTION

The device object of the present invention is intended to be installed in a vehicle, and allows the activation of electric motors of windows, convertible vehicle roofs, and sunroofs, completely closing the vehicle in situations of inclement weather or falling fluids, and/or in situations of low outdoor lighting.

Thus, the device saves the vehicle driver the task of operating the windows or moving sunroofs, thereby significantly increasing driving safety.

For this, the device comprises a control module, intended to be connected to the motors of the moving parts of the car that close the interior compartment, for example, connected to the window motor, to the roof motor in the case of convertible vehicles, and to the sunroof motor.

In a first aspect of the invention, in order to be able to detect fluids falling on the vehicle, the device comprises a rain sensor, of those commonly installed in vehicles, the rain sensor being connected to the control module. The rain sensor can be the vehicle's own rain sensor, which will also be connected to the windscreen wiper, without the need to install an additional rain sensor.

In this way, when the rain sensor detects any falling fluid, it sends a signal to the control module, which activates the electric motors to close the moving parts, completely protecting the vehicle's interior compartment from inclement weather such as water, snow or any liquid substance that can be detected by it.

In a second aspect of the invention, the device may further comprise a lighting sensor, of those commonly installed in vehicles, the lighting sensor being connected to the control module. The lighting sensor can be the vehicle's own lighting sensor, which will also be connected to the vehicle's lights, without the need to install an additional lighting sensor. When the lighting sensor detects a level of ambient lighting below a certain threshold, it sends a signal to the control module.

In the second aspect of the invention, there are two alternatives when it comes to activating the electric motors and closing the interior compartment once a low level of lighting is detected. In a first alternative, the control module comprises a connection intended to be linked to a key insertion reading sensor in the vehicle's ignition, such that the control module will only activate the electric motors when the keys are out of the ignition.

In this second aspect of the invention, in a second alternative, in order to be able to more precisely define when the interior compartment is closed in the event of changes in outdoor lighting, the control module may comprise a timer, such that when the ambient light has dimmed below a certain threshold for a certain period of time, the control module sends the activation signal to the electric motors. In this way, the device can be configured so that, for example, the compartment is closed or not when the vehicle passes through a tunnel.

The device may also comprise both the connection that is linked to the key insertion reading sensor and the timer, such that the control module sends the activation signal to the electric motors when the key is out of the ignition and a certain period of time has passed.

Furthermore, the device comprises a power supply module, connected to the control module and which enables the device to remain active at all times, even when the car is turned off. Thus, in the event that, for example, the driver has forgotten to close the roof when parking the vehicle, as soon as it starts to rain, the device will activate the electric motor of the roof and windows, closing the interior compartment, and preventing damage or destruction to the vehicle.

Also, in the event that the driver has forgotten to close the windows when parking the vehicle on the street and it gets dark, the device will activate the electric motor of the windows, closing them, and the roof or sunroof, if applicable, avoiding possible vandalism inside the vehicle.

The power supply module can be completely autonomous, running on a battery that can be charged, for example, with solar energy. Alternatively, the power supply module can be connected to the vehicle's power supply module, which is activated when the key is in the ignition, and also connected to the vehicle's passive power supply module, the passive power supply module being considered to be the one that powers the car's alarm system when the key is not inserted in the ignition. In this way, it is ensured that the device will always be able to activate the electric motors, regardless of whether the car is on or not.

Finally, and for safety reasons, the device may comprise an interior motion sensor positioned in the vehicle's compartment, connected to the control module and intended to be connected to the key insertion reading sensor, such that if the interior motion sensor is activated, signalling that there is a person or animal inside the compartment, and the key insertion reading sensor does not detect a key in the ignition, the control module does not send the activation signal to the electric motors, leaving the windows, roof or sunroof open.

Thus, if there is, for example, a pet in the interior compartment and it starts to rain or get dark, the vehicle will not close, as it could lead to the pet's suffocation.

The interior motion sensor can be a motion sensor of those commonly installed in the most modern vehicles, or an additional interior motion sensor.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, the following has been represented:
Figure 1A shows a schematic view of the emitting diode and the receiving diode of a rain sensor of the state of the art, when there is no rain on the vehicle's window pane.
Figure 1B shows a schematic view of the emitting diode and the receiving diode of a rain sensor of the state of the art, when there is rain on the vehicle's window pane.
Figure 2 shows a schematic view of the device of the invention connected to the electric motors of the windows, roof and sunroof.

### PREFERRED EMBODIMENT OF THE INVENTION

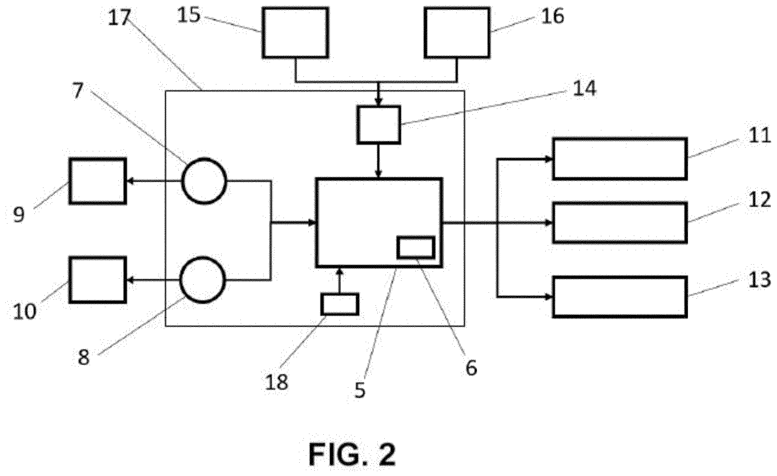

A preferred embodiment of the device (17) for automatically closing vehicle windows, roofs and sunroofs under adverse weather events is described below, with the help of figures 1A, 1B and 2.

As shown in figure 2, the device (17) comprises a control module (5) intended to be connected to electric motors (11, 12, 13) for closing parts of a vehicle's interior compartment. These electric motors can be, for example, an electric motor for windows (11), an electric motor for a roof (12) of a convertible vehicle, or an electric motor for a sunroof (13).

The device (17) also comprises, as shown in figure 2, a rain sensor (7), such as those commonly installed on vehicle window panes and which are connected to a windscreen wiper (9), activating the windscreen wiper (9) when the rain sensor (7) detects some fluid falling on the vehicle's window pane. The rain sensor (7) is connected to the control module (5) and it can be the very sensor already installed in the vehicle, or an additional sensor.

When the rain sensor (7) detects falling rain, snow or any other fluid on the vehicle's window pane, it sends a signal to the control module (5), which in turn activates the electric motors (11, 12, 13), closing the vehicle's interior compartment.

The operation of the rain sensor (7) is shown in detail in figures 1A and 1B. It is positioned close to the vehicle's window pane (3), normally on the rearview mirror, and comprises an emitting diode (1), which emits a beam of light at a certain angle towards the vehicle's window pane (3), which is reflected and registered in a receiving diode (2). In the event that there are no raindrops (4) on the car's window pane (3), the beam of light is fully reflected and read by the receiving diode (2), as shown in Figure 1A. If, on the contrary, there are raindrops (4) on the car's window pane (3), as is the case in figure 1B, the beam of light is not fully reflected, a smaller amount of light reaching the receiving diode (2).

Furthermore, the device (17) of the invention may comprise, as shown in figure 2, an ambient light sensor (8), such as those commonly installed in vehicles and which are connected to the lights (10), said lights being activated when the light sensor (8) detects a level of light below a certain threshold, when it gets dark or when the vehicle enters a tunnel or underground car park, for example. The light sensor (8) is connected to the control module (5), and it can be the very light sensor already installed in the vehicle, or it can be an additional light sensor.

When the light sensor (8) detects the dimming of ambient light below a certain threshold, it sends a signal to the control module (5), which in turn activates the electric motors (11, 12, 13), closing the vehicle's interior compartment.

To prevent the control module (5) from activating the electric motors (11, 12, 13) as soon as a level of ambient light below a certain threshold value is detected in the light sensor (8), the control module (5) comprises a timer (6), which, once the signal is received from the light sensor (8), begins a countdown before the control module (5) sends the closing signal to the electric motors (11, 12, 13).

The timer (6) is fully configurable, such that it is possible to decide how much time must elapse from when dimming in the level of ambient light is detected and when the interior compartment is closed. Thus, the device (17) can be configured so that the interior compartment is closed, for example, whenever it gets dark, but not when the vehicle passes through a tunnel.

Alternatively, or in combination with the timer (6), the control module (5) may comprise a connection intended to be linked to a key insertion reading sensor, such that the control module (5) only activates the electric motors (11, 12, 13) when a low level of lighting has been detected and the key is out of the ignition, or when a low level of lighting is detected, the key is out of the ignition, and a certain period of time has elapsed.

For safety reasons, the device (17) may comprise, as shown in figure 2, an interior motion sensor (18) positioned in the vehicle's compartment, connected to the control module (5) and intended to be connected to the key insertion reading sensor, such that if the interior motion sensor (18) is activated, signalling that there is a person or animal inside the compartment, and there is no key in the ignition, the control module (5) does not send the activation signal to the electric motors (11, 12, 13), leaving the windows, roof or sunroof open.

Lastly, the device (17) comprises a power supply module (14), which is fully autonomous and which enables the device (17) to operate even when the vehicle is turned off and with the key out of the ignition. In this way, if the driver has forgotten to close the vehicle's sunroof, roof or windows and it starts to rain, the device (17) will activate the electric motors (11, 12, 13) closing the compartment, and preventing both the elements inside the vehicle (seats, steering wheel, etc.) and all the electronics from being damaged.

Furthermore, if the driver has forgotten to close the sunroof, roof or windows when parking the vehicle on the street and it gets dark, the device (17) will close the interior compartment, preventing access to the vehicle and thus avoiding possible theft or damage.

The power supply module (14) may also be intended to be connected, as shown in figure 2, to the vehicle's power supply module (16) that is activated when the keys are inserted in the ignition, as well as to the vehicle's passive power supply module (15), the passive power supply module (15) being understood as the one that powers the vehicle's alarm system when the vehicle is turned off and with the key out of the ignition.

## Claims

1. A device (17) for automatically closing vehicle windows, roofs and sunroofs under adverse weather events, the windows, roofs and sunroofs being movable with electric motors (11, 12, 13), the device (17) comprising:
- a control module (5), intended to be connected to and activate the electric motors (11, 12, 13) of vehicle windows, roofs and/or sunroofs,
- a rain sensor (7), connected to the control module (5) and which sends a signal to the control module (5) when it detects that a fluid is falling on the vehicle, and
- a power supply module (14) connected to the control module (5).

2. The device (17) of claim 1, further comprising a light sensor (8) connected to the control module (5), configured to send a signal to the control module (5) when it detects dimming of the ambient light below a threshold value.

3. The device (17) of claim 2, further comprising a connection, intended to be linked to a key insertion reading sensor, the control module (5) being configured to activate the electric motors (11, 12, 13) when it receives the signal from the light sensor (8) and the key insertion reading sensor does not detect a key.

4. The device (17) of claim 2, wherein the control module (5) further comprises a timer (6) configured to be activated when the light sensor (8) detects dimming of the ambient light below a threshold value.

5. The device (17) of claim 2, further comprising a connection, intended to be linked to a key insertion reading sensor, and a timer (6) configured to be activated when the light sensor (8) detects dimming of the ambient light below a threshold value, the control module (5) being configured to activate the electric motors (11, 12, 13) when it receives the signal from the light sensor (8), the sensor reading does not detect a key, and a certain amount of time has elapsed.

6. The device of claim 1 or 2, wherein the control module (5) further comprises an interior motion sensor (18) positioned in the vehicle's interior compartment, the interior motion sensor (18) being connected to the control module (5) and intended to be connected to a key insertion reading sensor.

7. The device (17) of claim 1, wherein the power supply module (14) comprises a connection intended to be linked to an active power supply module (16) of the vehicle and to a passive power supply module (15) of the vehicle.
